Europäisches Patentamt

European Patent Office

Office européen des brevets

(19)

(11) Numéro de publication: **0 039 291**
**A1**

(12) **DEMANDE DE BREVET EUROPEEN**

(21) Numéro de dépôt: **81400655.7**

(22) Date de dépôt: **27.04.81**

(51) Int. Cl.³: **F 28 F 3/08**
**F 28 F 21/06**

(30) Priorité: **30.04.80 FR 8009790**

(43) Date de publication de la demande:
**04.11.81 Bulletin 81/44**

(84) Etats contractants désignés:
**BE DE FR GB IT**

(71) Demandeur: **COMMISSARIAT A L'ENERGIE ATOMIQUE**
Etablissement de Caractère Scientifique Technique et
Industriel
B.P. 510
F-75752 Paris Cedex 15(FR)

(71) Demandeur: **ECOPOL Société Anonyme**
26, rue du Château des Rentiers
F-75013 Paris(FR)

(72) Inventeur: **Besancon, Paul**
36, Avenue d'Italie
F-75013 Paris(FR)

(72) Inventeur: **Cappiello, Pierre**
164 quinto, Rue d'Aguesseau
F-92100 Boulogne Billancourt(FR)

(72) Inventeur: **Duffau, Claude**
3, rue Fravéga
F-83000 Toulon(FR)

(74) Mandataire: **Mongredien, André et al,**
c/o Brevatome 25, rue de Ponthieu
F-75008 Paris(FR)

(54) **Echangeur à plaques constitué par un empilement d'éléments modulaires composés de deux plaques rectangulaires identiques et d'une feuille pleine.**

(57) La présente invention concerne un élément modulaire moulé.

Ce module comprend : une première et une seconde plaques en matière moulée (11,12) constituées chacune par un cadre plan (110, 120) délimitant une ouverture centrale (111, 121) à l'intérieur de laquelle se trouvent des fils (112, 122), des orifices étant ménagés dans les cadres (110, 120) pour la circulation d'un fluide, une feuille pleine (13) mince intercalée entre les première et deuxième plaques (11,12), des moyens pour maintenir l'une contre l'autre les deux plaques planes entre lesquelles est interposée ladite feuille pleine (13).

Application aux échangeurs thermiques à plaques, à la filtration, à l'osmose et aux autres procédés de séparation par membranes.

FIG.2

EP 0 039 291 A1

La présente invention concerne un échangeur à plaque en matière moulée de conception simple et de réalisation économique, constitué par un empilement d'éléments modulaires pouvant être en particulier démonté et remonté aisément en vue de son nettoyage.

Les échangeurs de chaleur sont des appareils qui permettent de faire passer un flux thermique d'un fluide vers un autre. Les échangeurs à plaques constituent un type d'échangeur avantageux en raison, en particulier, de leur simplicité, de leur très bon coefficient d'échange, de leur facilité d'entretien, de leur compacité et des possibilités de faire varier la surface d'échange sans modifier le bâti. De tels appareils sont constitués par un empilement d'éléments plans assemblés pour délimiter des circuits d'écoulement séparés parcourus par des fluides, respectivement des fluides de températures différentes entre lesquels s'effectue un échange de chaleur.

On connaît de nombreuses réalisations d'échangeurs à plaques.

Selon un premier type de réalisation connu, les éléments plans sont constitués par des plaques métalliques, embouties et comportant des cannelures pour créer un régime d'écoulement turbulent, et serrées les unes contre les autres. Des joints disposés entre les plaques assurent l'étanchéité.

Selon un autre type de réalisation décrit, par exemple, dans le brevet n° 74 36882 déposé au nom du Commissariat à l'Energie Atomique, pour "Echangeur à plaques", l'échangeur à plaques est constitué par un empilement de feuilles minces, pleines, maintenues par des plaques d'espacement se présentant sous la forme de cadres délimitant une cavité centrale. Des orifices ménagés dans le cadre déterminent des circuits dans lesquels s'effectue la circulation des deux fluides. L'échange thermique se fait à travers l'épaisseur desdites feuilles minces.

B 6850-3 LW

Cette réalisation est avantageuse. En effet, il est possible de réduire l'épaisseur de la feuille mince à quelques centièmes de millimètre. Ainsi, en dépit de la mauvaise conductibilité du plastique, la diminution du coefficient d'échange par rapport aux échangeurs à plaques traditionnels est réduite.

Les cadres d'espacement peuvent être avantageusement réalisés en matière plastique moulée. On obtient ainsi un échangeur à plaques de conception simple, sans joint, d'encombrement réduit, présentant un bon coefficient d'échange thermique. De plus, on peut changer la surface d'échange à cause de son faible coût.

Cependant, des échangeurs de ce type sont malaisés à entretenir et à nettoyer. On sait en effet qu'il est nécessaire de démonter périodiquement les échangeurs à plaques afin de les débarrasser des dépôts qui se sont accumulés au cours du fonctionnement. Ceci est d'autant plus nécessaire qu'on trouve fréquemment à l'intérieur de la cavité centrale un grillage ou autre dispositif analogue destiné à créer un écoulement turbulent du fluide de manière à favoriser les échanges thermiques, dont les nombreux angles sont propices à la formation de dépôts. Lors de l'ouverture de l'échangeur, ni la feuille mince ni le grillage ne sont plus maintenus par les cadres d'espacement. Il en résulte des difficultés pour démonter et remonter l'échangeur. En particulier, il est nécessaire pour ce type d'appareil d'effectuer l'empilage des éléments à plat et de les serrer entre les deux plaques d'extrémité avant de pouvoir remettre l'appareil dans sa position de fonctionnement normale, ou de le laisser en position horizontale. Même dans cette position, l'entretien est moins aisé que pour le premier type de réalisation connu.

L'invention a précisément pour objet un échangeur à plaques présentant les avantages de l'appareil

B 6850-3 LW

précédemment décrit. En outre, il offre un certain nombre d'avantages supplémentaires.

Cet échangeur se compose d'un empilement d'éléments modulaires. On peut réaliser l'ensemble des éléments modulaires au moyen d'un moule unique. Chaque élément modulaire est constitué au moyen d'une plaque moulée dans le moule unique, et d'une plaque identique retournée de 180° autour de son axe A médian longitudinal, une feuille pleine étant intercalée et serrée entre les deux cadres.

On peut mouler en une seule pièce le cadre, l'espacement et le grillage de la cavité centrale, ce qui n'était pas possible avec la technique précédente de constitution des plaques. Outre l'avantage de simplicité qui en résulte, la tenue mécanique des plaques se trouve grandement améliorée.

L'échangeur de l'invention permet un démontage et surtout un remontage aisé de l'appareil. En effet, chaque feuille pleine est maintenue en permanence par deux cadres serrés l'un contre l'autre. Chaque élément modulaire forme ainsi un ensemble rigide qui possède une tenue propre, et qui est donc facile à manipuler.

D'autre part, étant donné que les canaux d'arrivée et d'évacuation des fluides sont creusés sur une seule face de chaque cadre, ils sont ouverts et peuvent de ce fait être nettoyés facilement, par exemple au moyen d'un jet d'eau. Il s'agit d'un avantage important, en particulier dans le cas de l'industrie alimentaire.

Plus précisément, l'échangeur à plaques de l'invention, qui est constitué par un empilement d'éléments modulaires serrés entre deux plaques d'extrémité pour délimiter deux circuits d'écoulement séparés dans lesquels circulent deux fluides échangeant de la chaleur, l'empilement étant constitué alternativement par un élément modulaire et par un élément modulaire identique retourné de 180° par rapport à l'un de ses axes. Il se caractérise en ce que chaque élément modulaire se compose de deux plaques rectangulaires identiques en matière moulée appelées respectivement première et deuxième plaques et d'une feuille pleine, chaque plaque étant constituée par un cadre plan qui présente un axe A médian longitudinal et un axe B médian transversal, le cadre délimitant une ouverture centrale, à l'intérieur de laquelle se trouvent des fils parallèles, solidaires du cadre et d'épaisseur sensiblement égale à celle de ce dernier, ces fils étant tels que par retournement d'un élément modulaire autour d'un des axes B par rapport à l'élément adjacent, on détermine, en les empilant, des passages de circulation pour les fluides des canaux ouverts d'arrivée et d'évacuation des fluides étant creusés dans l'une des faces du cadre, ce qui permet un nettoyage aisé de l'échangeur, l'autre face du cadre étant plane, ladite deuxième plaque étant retournée de 180° autour de son axe médian A avant d'être accolée à la première plaque, leurs faces planes dos à dos, la feuille pleine étant intercalée entre lesdites première et seconde plaques, et recouvrant complètement et d'une manière continue l'ouverture centrale de chaque plaque, l'élément modulaire comportant en outre des moyens pour maintenir l'une contre l'autre lesdites première et seconde plaques, de telle sorte que la feuille pleine est maintenue en permanence.

Selon une variante de réalisation, les éléments modulaires qui constituent l'échangeur de l'invention peuvent être constitués par deux plaques identiques ou par des plaques différentes. Les différences entre ces deux plaques peuvent porter sur :
- l'angle, la densité ou la forme des fils constituant les grillages,
- l'épaisseur des cadres,
- le diamètre des trous d'alimentation en fluide et la forme des zones de distribution.

On peut ainsi réaliser des échanges entre des fluides ayant des débits différents ou des propriétés thermodynamiques très différentes. On peut également réaliser les échanges de chaleur à contre-courant, à co-courant.

De préférence, la plaque est réalisée en un matériau plastique.

De préférence, le film mince est réalisé en téflon, en polypropylène, ou en métaux inoxydables, matériaux très résistants, relativement peu coûteux du fait de leur faible épaisseur et permettant la mise en oeuvre de fluides très corrosifs.

De plus, il peut être constitué par une superposition de deux films de nature différente, telle que du métal plastifié, ou par deux films, l'un en métal, l'autre en plastique, superposés.

Selon un mode de réalisation particulier, l'échangeur à plaques de l'invention comprend quatre orifices dont les centres sont disposés symétriquement à la fois par rapport aux axes A et B ménagés dans le cadre, deux de ces orifices, disposés de part et d'autre de l'axe B, étant reliés à l'ouverture centrale par des canaux creusés dans l'une des faces du cadre, et deux autres orifices ne communiquant pas avec l'ouverture centrale.

Selon un autre mode de réalisation, les plaques de l'échangeur de l'invention sont carrées et décalées angulairement de 90° l'une par rapport à l'autre.

Selon un troisième mode de réalisation, l'échangeur de l'invention comprend une première et une seconde plaques, la première de ces plaques comportant deux orifices reliés à l'ouverture centrale par des canaux creusés dans l'une de ses faces pour la circulation d'un liquide, la seconde plaque comportant deux orifices qui ne communiquent pas avec l'ouverture centrale, et sur ses bords longitudinaux, une série d'orifices pour la circulation d'un gaz.

B 6850-3 LW

D'autres caractéristiques et avantages de l'invention apparaîtront encore à travers la description qui suit d'exemples de réalisation de l'invention, donnés à titre indicatif et nullement limitatif, en référence aux dessins annexés, sur lesquels :

- la figure 1 représente une vue de dessus d'un élément modulaire. L'empilement de plusieurs de ces éléments modulaires constitue l'échangeur à plaques de l'invention ;

- la figure 2 représente vu en coupe, l'élément modulaire de la figure 1 ;

- la figure 3 représente une vue de détail de l'élément modulaire, représenté sur la figure 1, pour deux positions de films possibles ;

- les figures 4a et 4b représentent deux vues en coupe d'un échangeur de chaleur à plaques conforme à la présente invention ;

- la figure 5 représente une variante de l'élément modulaire représenté sur les figures 1 à 4 ;

- la figure 6 représente un troisième mode de réalisation de l'élément modulaire adapté à un échange gaz-gaz à courants croisés ;

- la figure 7 représente un élément modulaire constitué de deux plaques dont l'une est prévue pour la circulation d'un liquide et l'autre pour la circulation d'un gaz ;

- la figure 8 représente un échangeur constitué de plusieurs types de plaques.

L'échangeur à plaques de l'invention est constitué par un empilement d'éléments modulaires serrés les uns contre les autres entre deux plaques d'extrémité pour délimiter deux circuits d'écoulement séparés parcourus par deux fluides échangeant de la chaleur et maintenus serrés entre une plaque d'extrémité supérieure et une plaque d'extrémité inférieure.

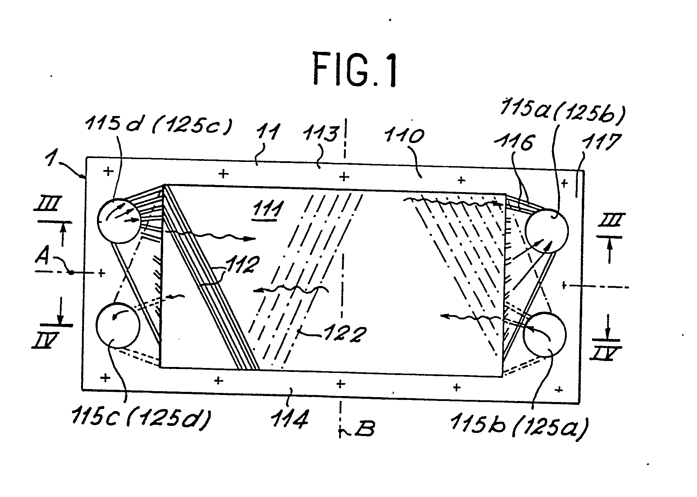

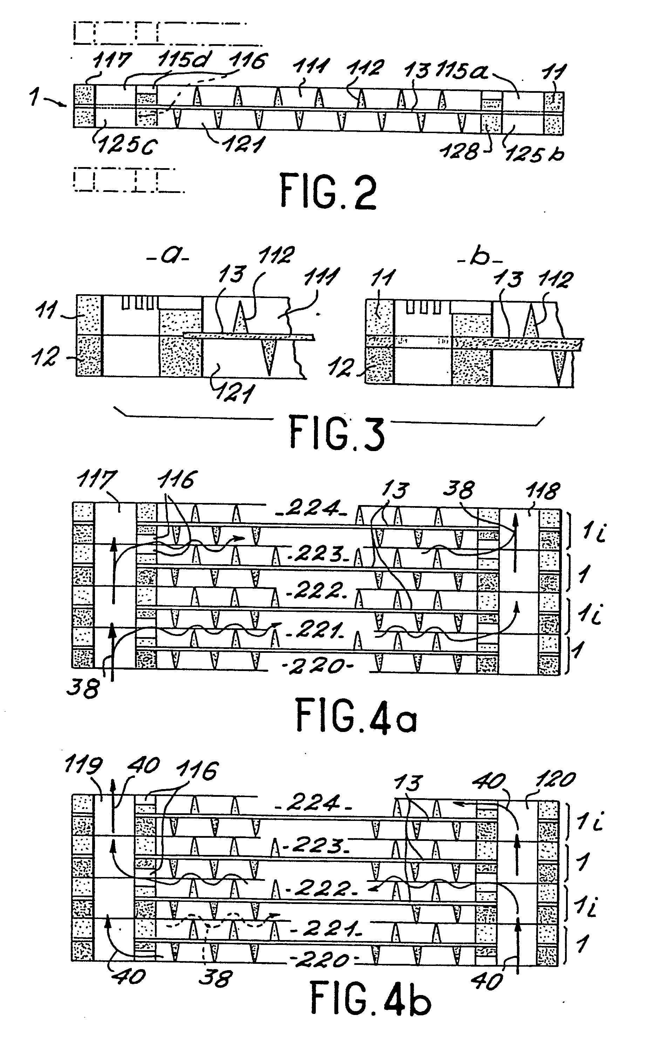

La figure 1 représente une vue de dessus de l'un de ces éléments modulaires 1. On décrira d'abord la structure de l'élément modulaire en référence aux figures 1 à 3. Puis, en référence aux figures 4a et 4b, la manière dont ces éléments sont assemblés pour former l'échangeur à plaques de l'invention.

L'élément modulaire 1 se compose d'une première plaque 11 en matière plastique moulée, d'une deuxième plaque 12 également en matière plastique moulée et d'une feuille mince 13 pleine et étanche, de matière plastique ou métallique, interposée entre les plaques 11 et 12. Le module 1 comporte en outre des moyens, tels que des clips pour serrer l'une contre l'autre les plaques 11 et 12.

La première plaque 11 apparaît en traits pleins, tandis que la plaque inférieure 12 apparaît en traits mixtes.

La première plaque 11 est constituée par un cadre plan 110, qui présente un axe A médian longitudinal et un axe B médian transversal perpendiculaire à A, et qui délimite une ouverture centrale 111 à l'intérieur de laquelle des fils parallèles 112 inclinés par rapport à l'axe A relient les deux bords longitudinaux respectivement 113 et 114 du cadre 110. Quatre orifices, référencés 115a à 115d, disposés symétriquement à la fois par rapport aux axes A et B sont ménagés dans le cadre 110. Deux de ces orifices 115a et 115d, disposés d'un même côté de l'axe A, sont reliés à l'ouverture centrale 111 par des canaux 116 creusés dans la face 117 du cadre 110. Les canaux 116, disposés radialement à partir des ouvertures 115a et 115d établissent une communication sur toute la longueur sans laisser d'espace mort pour le fluide entre l'ouverture centrale 111 et chacun des orifices 115a et 115d. Cette absence d'espace mort permet une utilisation maximale de la surface d'échange et une possibilité de nettoyage chimique sans démonter l'échangeur.

Les orifices 115b et 115c ne communiquent pas avec l'ouverture centrale 111.

B 6850-3 LW

L'ensemble de la plaque 11 peut être réalisé facilement d'une seule pièce en matière plastique moulée, y compris les fils parallèles 112.

Elle peut également être obtenue par soudage d'éléments moulés, de façon à réaliser un échangeur de grande longueur.

L'élément modulaire 1 selon l'invention comporte encore une seconde plaque 12 en matière plastique moulée, disposée sous la première plaque 11. Cette seconde plaque 12 représentée en traits mixtes est identique à la première plaque 11. Elle est simplement retournée de 180° autour de son axe A avant d'être accolée à la première plaque 11. Ainsi, cette plaque 12 comporte quatre orifices, respectivement 125a à 125d, qui se superposent aux orifices 115a à 115d de la plaque 11. Les orifices 125a et 125d de la plaque 12 communiquent par des canaux creusés dans l'une de ses faces, avec son ouverture centrale 121. Les deux autres orifices 125c et 125b ne communiquent pas avec cette ouverture centrale 121. Comme on a retourné la plaque 12, les orifices 115a et 115b de la plaque 11 coïncident avec les orifices 125b et 125a de la plaque 12, tandis que les orifices 115d et 115c de la plaque 11 communiquent avec les orifices 125c et 125d de la plaque 12.

On peut constater d'autre part que l'inclinaison des fils parallèles 122 de la plaque 12, disposés obliquement par rapport à l'axe A présentent une inclinaison inverse des fils 112 et par suite les croisent. Ce sont ces points de croisement qui maintiennent l'espacement entre les films et provoquent le régime turbulent.

Entre les plaques 11 et 12 est interposée une feuille mince 13, pleine et étanche. Le feuillet 13 recouvre la totalité de l'ouverture centrale 111, et la déborde légèrement de manière à être pincé entre les plaques 11 et 12, comme on peut le voir sur la figure 3a.

Cette disposition assure l'étanchéité entre les deux circuits d'écoulement. Dans le cas où la feuille 13 est trop épaisse, c'est-à-dire dans le cas où son épaisseur est supérieure à 0,1 mm environ, l'étanchéité de l'ensemble ne peut être assurée comme représenté sur la figure 3a. C'est pourquoi la feuille 13 recouvre alors toute la surface de l'élément modulaire 1, comme représenté sur la figure 3b. Quatre orifices sont pratiqués dans la feuille 13 en regard des orifices 115a à 115d (125a à 125d) des plaques 11 et 12.

On a représenté sur la figure 2 une vue en coupe selon la ligne III-III de la figure 1 de l'élément modulaire 1. Sur cette figure, on remarque plus particulièrement l'orifice 115a de la plaque 11 superposé à l'orifice 125b de la plaque 12, et l'orifice 115d de la plaque 11 superposé à l'orifice 125c de la plaque 12. Ainsi, l'une des plaques du module 1, en l'occurrence la plaque 11, permet la communication avec l'ouverture centrale 111, tandis que la communication avec l'ouverture centrale 121 de la plaque 12 n'est pas possible.

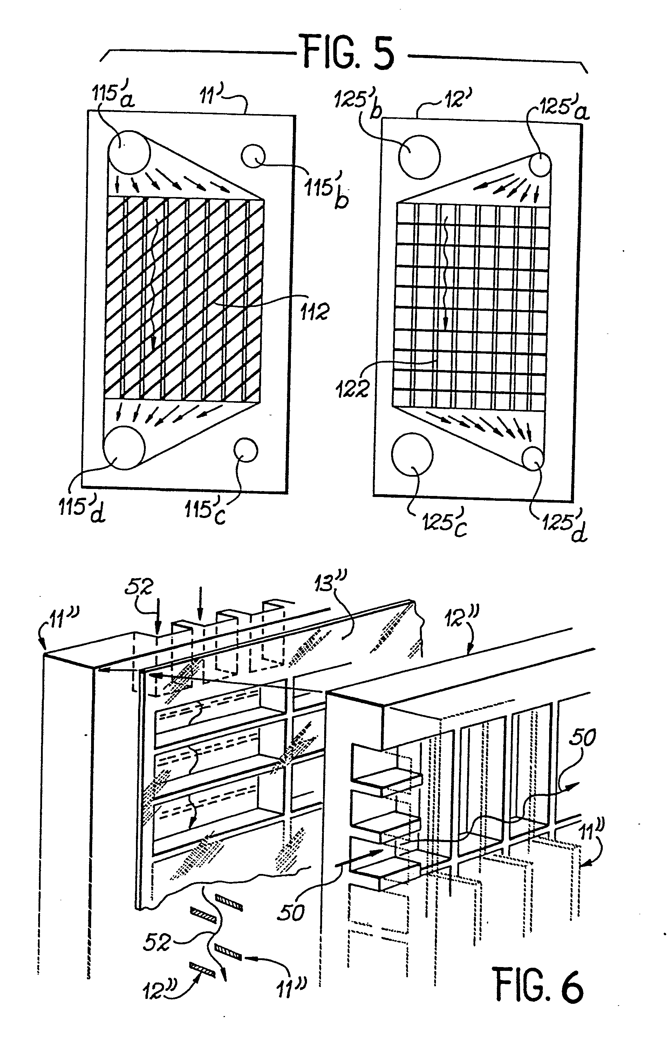

On a représenté sur la figure 4a une vue en coupe selon la ligne III-III de la figure 1 d'une succession d'éléments modulaires 1 selon l'invention, disposés pour délimiter deux circuits d'écoulement séparés pour constituer un échangeur thermique à plaques conforme à l'invention. Afin de délimiter ces deux circuits d'écoulement séparés, on accolé alternativement des modules 1 disposés dans la position qu'ils occupent sur la figure 2 et des modules 1 désignés sur la figure 5a par la référence $1_i$ que l'on a retourné de 180° autour de leur axe B. Dans la suite du texte, les parties du module $1_i$ seront désignées par les mêmes références que celles du module 1, suivies de l'indice i. Ainsi, entre deux feuilles minces successives 13, on trouve soit deux faces, respectivement 117 et $117_i$ dans lesquelles sont creusés des ca-

B 6850-3 LW

naux de circulation pour le fluïde, respectivement 116 et $116_i$, soit au contraire deux faces ne comportant pas de canaux de circulation, respectivement 118 et $118_i$. On délimite ainsi une série de cavités 220, 221, 222, 223, 224, qui, alternativement, communiquent puis ne communiquent pas avec les canaux 117 et 118. Les cavités 221, 223,... qui communiquent avec les canaux 117 et 119 déterminent un premier circuit pour un premier fluide, par exemple un fluide froid 38.

A l'intérieur des cavités 220, 221, 222, 223, 224, on trouve les fils parallèles 112 et d'autre part les fils 122. Ces fils qui se croisent provoquent des turbulences qui améliorent les transferts thermiques. Un autre avantage de ces fils est de contribuer à la résistance de l'échangeur en maintenant les bords longitudinaux, tels que 113 et 114, ces derniers ayant tendance à s'écarter sous l'effet de la pression des fluides circulant dans l'échangeur. Ils maintiennent également un espacement constant entre les feuilles minces.

Selon une variante de réalisation, les fils parallèles 112 et 122 sont perpendiculaires à l'axe longitudinal de l'élément modulaire. Cette disposition est celle qui permet le mieux de maintenir les bords longitudinaux 113 et 114. Dans cette variante, les espacements sont tels que lors du retournement de la plaque 12 contre la plaque 11, les fils de la plaque 12 viennent s'intercaler entre les fils de la plaque 11, ce qui produit une série de chicanes, telles que représentées dans la figure 4a. Dans cette variante, il existe en outre des fils parallèles à A qui, lors du retournement de la plaque 12, coïncident exactement avec leurs homologues de la plaque 11 et font office d'entretoises. Un avantage d'avoir ainsi des fils qui se croisent au niveau de chaque plaque est de faciliter leur moulage.

La figure 4b représente une vue en coupe de l'échangeur de chaleur à plaques représenté sur la figure

B 6850-3 LW

**0039291**

4a, prise selon la ligne IV-IV de la figure 1. Comme on peut le constater sur cette figure, la superposition des orifices 115b et 115c des plaques 11 et des orifices 125a et 125d des plaques 12 détermine deux autres canaux de circulation, respectivement 119 et 120 pour un deuxième fluide, par exemple un fluide chaud 40. Le fluide 40 parcourt les cavités désignées par les références 220, 222, 224, tandis que le fluide froid 38 parcourt les cavités 221, 223. Ainsi, l'échange de calories du fluide chaud 40 vers le fluide froid 38 s'effectue au travers des feuilles minces 13. Ces feuilles minces peuvent être réalisées à partir d'un matériau plastique ou métallique. Elles peuvent être réalisées notâmment en polytétrafluoréthylène ou en métaux inoxydables. Leur épaisseur est comprise entre 0,05 et 1 mm. Elle permet ainsi un excellent coefficient d'échange thermique.

On remarque que l'échangeur à plaques décrit sur la figure 4 prévoit une circulation des fluides 38 et 40 à contre-courant. Bien entendu, on pourrait selon une variante de réalisation prévoir une circulation de ces fluides à co-courant.

L'empilement des modules 1 et $1_i$ est maintenu par deux plaques d'extrémité telles que la plaque 4 représentée sur la figure 1, en acier ou en autre matériau approprié, solidarisées l'une à l'autre par des tirants (non représentés) s'étendant perpendiculairement au plan des éléments modulaires 1 et $1_i$, assurant ainsi un démontage aisé pour l'entretien ou le changement d'un ou plusieurs modules.

Selon une variante de réalisation, chaque module peut être constitué de deux plaques d'épaisseurs différentes. On détermine ainsi l'écoulement dont la section de passage est différente, ce qui permet d'adapter l'échangeur à des débits différents pour les deux fluides.

Un avantage essentiel de l'échangeur à plaques réalisé conformément à l'invention est qu'en cas de démontage, par exemple en vue de son nettoyage, les films minces 13 restent maintenus entre les cadres 110 et 120 de l'élément modulaire par un système d'enclenchement de picots et éventuellement, par d'autres moyens, comme des clips. Cette caractéristique permet ainsi de démonter puis de remonter aisément l'échangeur, indifféremment en position horizontale ou verticale.

L'échangeur selon l'invention peut être réalisé en joignant bout à bout des éléments moulés d'ouverture centrale 111, afin de constituer un échangeur de très grande longueur.

L'élément modulaire selon l'invention s'applique également à l'osmose (directe ou inverse), à la dialyse, à la filtration et l'ultrafiltration. Dans ces cas, le film mince 13 n'est plus étanche, mais est constitué d'une membrane adaptée à la fonction recherchée.

On a représenté sur la figure 5 une variante de réalisation de l'élément modulaire représenté sur les figures 1 à 4. Cet élément modulaire est constitué de deux plaques, une plaque 11a et une plaque 11b. Cependant, contrairement à l'exemple de réalisation décrit précédemment, les plaques 11a et 11b ne sont pas identiques. Elles sont de ce fait réalisées à partir de deux moules différents. Comme on peut le constater, le diamètre des trous d'alimentation en fluide est différent. Dans le cas de la plaque 11', le diamètre des trous 115'a et 115'd est supérieur au diamètre des trous 115'b et 115'c. Il en est de même en ce qui concerne les trous correspondants de la plaque 12'.

On remarque également que les fils constituant les grillages de ces deux plaques sont différents. On retrouve pour les deux plaques des fils longitudinaux jouant le rôle d'entretoises pour la feuille mince. En

B 6850-3 LW

revanche, les fils disposés transversalement sont inclinés dans le cas de la plaque 11', tandis qu'ils sont perpendiculaires aux fils longitudinaux dans le cas de la plaque 12'.

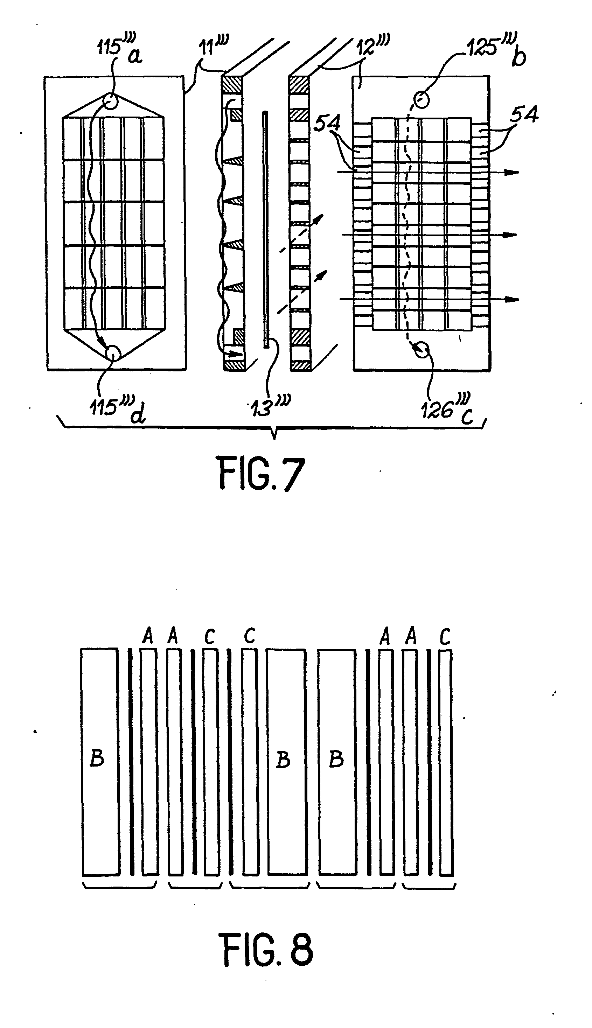

On a représenté sur la figure 6 un troisième mode de réalisation du module selon l'invention. Les deux plaques de cet élément modulaire sont identiques. Elles sont par conséquent réalisées à partir d'un seul moule. La plaque 12" qui est de forme carrée, est simplement tournée de 90° par rapport à la plaque 11", avant d'être accolée à cette dernière.

Cet échangeur s'applique entre autre à préchauffer l'air de combustion à partir de fumées corrosives, le courant d'air 50 circulant par exemple horizontalement, comme représenté sur la figure 6, tandis que les fumées corrosives circulent de bas en haut, comme représenté en 52.

On a représenté sur la figure 7 un quatrième mode de réalisation de l'élément modulaire selon l'invention. Cet élément modulaire se compose d'une première plaque 11"' destinée à la circulation d'un liquide, et d'une deuxième plaque 12"' pour la circulation d'un gaz. La plaque 11"' comporte deux orifices circulaires 125"'a et 125"'b reliés à l'ouverture centrale 111"' par des canaux creusés dans l'une de ses faces. La plaque 12"' comporte deux orifices 125"'b et 125"'c qui ne communiquent pas avec l'ouverture centrale 121"' de la plaque, et sur ses bords longidutinaux une série d'orifices 54 pour la circulation du gaz. Dans la plaque 11"', la circulation du fluide s'effectue dans le sens longitudinal, tandis que dans la plaque 12"', la circulation du gaz s'effectue dans le sens transversal. On réalise ainsi une circulation à courants croisés.

Un tel échangeur peut être utilisé pour réchauffer l'eau destinée au chauffage de locaux à partir de la chaleur contenue dans des fumées corrosives.

B 6850-3 LW

Selon une autre application, cet échangeur pourrait être utilisé pour constituer un radiateur d'automobile.

Dans le cas d'applications telles que l'automobile ou l'électroménager, cet échangeur peut être entièrement soudé.

Enfin, on a représenté sur la figure 8, un échangeur réalisé en assemblant plusieurs types de plaques. Ainsi, l'échangeur représenté sur cette figure comporte trois types de plaques différents.

B 6850-3 LW

REVENDICATIONS

1. Echangeur à plaques du genre de ceux qui sont constitués par un empilement d'éléments modulaires (1), serrés entre deux plaques d'extrémité pour délimiter deux circuits d'écoulement séparés dans lesquels circulent deux fluides échangeant de la chaleur, l'empilement étant constitué alternativement par un élément modulaire et par un élément modulaire identique retourné de 180° par rapport à l'un de ses axes, caractérisé en ce que chaque élément modulaire (1) se compose de deux plaques rectangulaires identiques en matière moulée appelées respectivement première et deuxième plaques (11, 12), et d'une feuille pleine (13), chaque plaque (11, 12) étant constituée par un cadre plan (110) qui présente un axe A médian longitudinal et un axe B médian transversal, le cadre (110) délimitant une ouverture centrale (111), à l'intérieur de laquelle se trouvent des fils parallèles (112), solidaires du cadre et d'épaisseur sensiblement égale à celle de ce dernier, ces fils (112) étant tels que par retournement d'un élément modulaire (1) autour d'un des axes B par rapport à l'élément adjacent, on détermine, en les empilant, des passages de circulation pour les fluides, des canaux ouverts (116) d'arrivée et d'évacuation des fluides étant creusés dans l'une des faces (la face 117) du cadre (110), ce qui permet un nettoyage aisé de l'échangeur, l'autre face du cadre étant plane, ladite deuxième plaque (12) étant retournée de 180° autour de son axe médian A avant d'être accolée à la première plaque, leurs faces planes dos à dos, la feuille pleine (13) étant intercalée entre lesdites première et seconde plaques, et recouvrant complètement et d'une manière continue l'ouverture centrale (111) de chaque plaque, l'élément modulaire (1) comportant en outre des moyens pour maintenir l'une contre l'autre lesdites première et seconde plaques, de telle sorte que la feuille pleine (13) est maintenue en permanence.

2. Echangeur à plaques du genre de ceux qui sont constitués par un empilement d'éléments modulaires (1), serrés entre deux plaques d'extrémité pour délimiter deux circuits d'écoulement séparés dans lesquels circulent deux fluides échangeant de la chaleur, l'empilement étant constitué alternativement par un élément modulaire et par un élément modulaire identique retourné de 180° par rapport à l'un de ses axes, caractérisé en ce que chaque élément modulaire (1), se compose de deux plaques rectangulaires en matière moulée, appelées respectivement première et deuxième plaques (11, 12), et d'une feuille pleine (13), chaque plaque (11, 12) étant constituée par un cadre plan (110) qui présente un axe A médian longitudinal et un axe B médian transversal, le cadre (110) délimitant une ouverture centrale (111) à l'intérieur de laquelle se trouvent des fils parallèles (112), solidaires du cadre et d'épaisseur sensiblement égale à celle de ce dernier, ces fils (112) étant tels que par retournement d'un élément modulaire (1) autour d'un des axes B par rapport à l'élément adjacent, on détermine, en les empilant, des passages de circulation pour les fluides, des canaux ouverts (116) d'arrivée et d'évacuation des fluides étant creusés dans l'une des faces (la face 117) du cadre (110), ce qui permet un nettoyage aisé de l'échangeur, l'autre face du cadre étant plane, ladite deuxième plaque (12) étant accolée à la première plaque, leurs faces planes dos à dos, la feuille pleine (13) étant intercalée entre lesdites première et seconde plaques, et recouvrant complètement et d'une manière continue l'ouverture centrale (111) de chaque plaque, l'élément modulaire (1) comportant en outre des moyens pour maintenir l'une contre l'autre lesdites première et se-

B 6850-3 LW

0039291

conde plaques, de telle sorte que la feuille pleine (13) est maintenue en permanence.

3. Echangeur selon l'une quelconque des revendications 1 et 2, caractérisé en ce que ladite feuille (13) est réalisée à partir d'un matériau plastique, métallique ou mixte, d'épaisseur comprise entre 0,05 et 1 mm.

4. Echangeur selon l'une quelconque des revendications 1 à 3, caractérisé en ce que la plaque (11, 12) est réalisée en matériau plastique.

5. Elément modulaire selon l'une quelconque des revendications 1 à 4, caractérisé en ce que chaque plaque comprend quatre orifices (115a,b,c,d) dont les centres sont disposés symétriquement à la fois par rapport aux axes A et B ménagés dans ledit cadre (110), deux de ces orifices (115a et 115d) disposés de part et d'autre de l'axe B étant reliés à ladite ouverture centrale (111) par des canaux (116) creusés dans l'une des faces (la face 117) du cadre (110), les deux autres orifices (115b et 115c) ne communiquant pas avec l'ouverture centrale (111).

6. Echangeur selon l'une quelconque des révendications 2 à 4, caractérisé en ce que les plaques (11', 12') sont carrées et décalées angulairement de 90° l'une par rapport à l'autre.

7. Echangeur selon l'une quelconque des revendications 2 à 4, caractérisé en ce qu'il comprend une première et une seconde plaques (11"', 12"'), la première plaque (11"') comportant deux orifices (125"'a, 125"'b) reliés à l'ouverture centrale (111"') par des canaux creusés dans l'une de ses faces pour la circulation d'un liquide, la seconde plaque (12"') comportant deux orifices (125"'b, 125"'c) qui ne communiquent pas avec l'ouverture centrale (121"') et sur ses bords longitudinaux, une série d'orifices (54) pour la circulation d'un gaz.

# FIG.1

FIG.2

FIG.3

FIG.4a

FIG.4b

— FIG. 5 —

FIG. 6

FIG.7

FIG.8

**Office européen des brevets**

# RAPPORT DE RECHERCHE EUROPEENNE

Numéro de la demande

EP 81 40 0655

| Catégorie | DOCUMENTS CONSIDERES COMME PERTINENTS Citation du document avec indication, en cas de besoin, des parties pertinentes | Revendication concernée | CLASSEMENT DE LA DEMANDE (Int. Cl.³) |
|---|---|---|---|
| X | FR - A - 2 290 646 (C.E.A.) <br> * Document en entier * <br><br> -- | 1-5 | F 28 F  3/08 <br> 21/06 |
| X | FR - A - 997 591 (CREAMERY PACKAGE) <br> * Page 1, lignes 16-49; page 2, colonne de gauche, lignes 9-32; page 4, colonne de gauche, lignes 9-25; figures 2,10 * <br><br> -- | 1-3,5 | |
| | FR - A - 2 184 536 (A.N.V.A.R.) <br> * Page 2, ligne 31 - page 3, ligne 14; page 4, paragraphe 1; page 5, ligne 24 - page 6, ligne 14; figure 1 * <br><br> -- | 1-5 | **DOMAINES TECHNIQUES RECHERCHES (Int. Cl.³)** <br><br> F 28 F <br> F 28 D |
| | FR - A - 2 175 804 (PHILIPS) <br> * Page 4, ligne 7 - page 5, ligne 15; figure 1 * <br><br> -- | 1-3,5 | |
| | FR - A - 2 314 461 (DIEU) <br> * Page 2, lignes 23-39; figure 6 * <br><br> -- | 6 | |
| | DE - A - 1 930 815 (AIR PREHEATER-COMP.) <br> * Page 4, lignes 12-21; page 6, dernier paragraphe; page 7, premier paragraphe; page 8, revendication 1; figures 4,5 * <br><br> ---- | 7 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-08-1981 | SCHOUFOUR |

OEB Form 1503.1  06.78